# EUROPÄISCHE PATENTSCHRIFT

(11) **EP 2 565 560 B1**
(45) Veröffentlichungstag und Bekanntmachung des Hinweises auf die Patenterteilung: **17.04.2019**
(21) Anmeldenummer: 12180153.4
(22) Anmeldetag: 10.08.2012
(51) Int. Cl.: F25B 39/02, F28D 9/00

(54) **System für ein Kraftfahrzeug zum Erwärmen und/oder Kühlen**
System for a motor vehicle for heating and/or cooling
Système pour un véhicule automobile pour chauffer et/ou refroidir

(30) Priorität: 31.08.2011 DE 102011081886
(43) Veröffentlichungstag der Anmeldung: 06.03.2013
(73) Patentinhaber: MAHLE Behr GmbH & Co. KG, 70469 Stuttgart (DE)
(72) Erfinder: Schäfer, Bernd, 70176 Stuttgart (DE); Wesner, Markus, 70372 Stuttgart (DE)
(74) Vertreter: Grauel, Andreas

(56) Entgegenhaltungen:
- EP-A2- 1 637 709
- EP-A2- 1 906 126
- WO-A1-02/01124
- DE-A1- 19 805 285
- DE-A1-102008 028 290
- DE-A1-102009 015 653
- DE-A1-102010 012 869

## Beschreibung

Die Erfindung betrifft ein System für ein Kraftfahrzeug zum Erwärmen und/oder Kühlen einer Batterie gemäß dem Oberbegriff des Anspruches 1 und eine Kraftfahrzeugklimaanlage gemäß dem Oberbegriff des Anspruches 9.

Batterien von Hybrid- oder Elektrofahrzeugen müssen erwärmt oder gekühlt werden, um eine ausreichende Betriebstemperatur der Batterie, beispielsweise in einem Temperaturbereich zwischen 0°C und 40°C, zu erhalten. Bei einer Entnahme oder Laden von elektrischer Energie aus der Batterie gibt die Batterie Wärme ab, so dass die Batterie gekühlt werden muss, damit sich diese nicht auf Temperaturen von mehr als 30°C oder 40°C erwärmt. Bei geringen Außentemperaturen, die beispielsweise unterhalb von 0°C liegen, ist ein Erwärmen der Batterie erforderlich, damit elektrische Energie von der Batterie entnommen werden kann als auch eine Aufladung mit elektrischer Energie möglich ist. Hierzu weist das Hybrid- oder Elektrofahrzeug einen Kühlmittelkreislauf auf mit dem die Batterie gekühlt und erwärmt werden kann.

Die DE 101 28 164 A1 zeigt ein Fahrzeug-Kühlsystem für ein Elektro- oder Hybridfahrzeug. Das Fahrzeug-Kühlsystem weist einen Kühlmittelkreislauf auf, der thermisch mit einer Batterie gekoppelt ist. In den Kühlmittelkreislauf mit der Batterie ist ferner ein Verdampfer eines Kältekreises mit einem Kondensator, einem Kompressor und einem Expansionsventil eingebaut. Mittels des Verdampfers kann der Kühlmittelkreislauf mit der Batterie gekühlt werden, so dass dadurch mittels des Kältekreises auch die Batterie gekühlt werden kann. Außerdem ist es bekannt, in einem derartigen Fahrzeug-Kühlsystem den Kühlmittelkreislauf für die Batterie mit einem Umgebungsluft-Wärmeübertrager zu koppeln, so dass bei niedrigen Außentemperaturen die Batterie durch Abgabe der Wärme an die Umgebungsluft gekühlt werden kann, ohne dass der Kältekreis in Betrieb ist.

Aus der DE 10 2008 017 113A1 ist ein Verdampfer als Wärmeübertrager für ein Kraftfahrzeug bekannt. Eine Mehrzahl von Platten sind parallel zueinander gestapelt als Wärmeübertrager in Platten- bzw. Scheibenbauweise. Zwischen den Platten bildet sich ein erster Strömungsraum für Kältemittel als erstes Fluid und ein zweiter Strömungsraum für ein zweites Fluid, so dass Wärme von dem zweiten Fluid auf das Kältemittel übertragen werden kann.

Die DE 195 23 475 C1 zeigt einen Plattenwärmetauscher, insbesondere Ölkühler mit einem Stapel von Wärmetauscherplatten, die unter Bildung von getrennten Strömungskanälen für die wärmeaustauschenden Medien ineinander liegen und fügetechnisch verbunden sind und bei dem die Ein- und Austrittsmündungen für wenigstens das eine Medium auf der gleichen Seite des Plattenstapels liegen, mit in den Ein- und Ausströmkanälen vorgesehenen Einsätzen zur Strömungsumlenkung in Mäanderform, wobei der eine Einsatz den einen Ein- und Ausströmkanal im Wesentlichen sperrt und der andere Einsatz den anderen Ein- oder Ausströmkanal bereichsweise hülsenartig auskleidet, wobei die Einsätze als ein einziges Spritzgussteil hergestellt sind, die durch ein Verbindungsteil verbunden sind und, dass die Einsätze lösbar in dem Einströmkanal und in dem Ausströmkanal befestigt sind.

Die EP 2 107 328 A1 zeigt einen Verdampfer, insbesondere für ein Kraftfahrzeug, umfassend eine Mehrzahl von parallel zueinander in einer Hochrichtung gestapelten Platten mit fluchtend angeordneten Durchbrechungen zur Zuführung und Abführung eines als Kältemittel ausgebildeten ersten Fluids und eines zweiten Fluids, wobei zwischen zwei benachbarten Platten ein Strömungskanal erster Art zur Führung des ersten Fluids im Wechsel mit einem Strömungskanal zweiter Art zur Führung des zweiten Fluids ausgebildet sind, wobei eine wärmeübertragende Fläche der Platten eine Länge in Strömungsrichtung des Kältemittels und eine hierzu senkrechte Breite aufweist, wobei das Verhältnis der Länge zu der Breite nicht größer als etwa 1,3 ist.

Wärmeübertrager oder Chiller in Scheibenbauweisen werden in Systemen eingesetzt, um mit einem Kältekreis die Batterien von Hybrid- oder Elektrofahrzeugen zu kühlen. Dabei ist der Wärmeübertrager oder Chiller in Scheibenbauweise aufgebaut und umfasst eine Vielzahl von übereinander gestapelten Stapelscheiben, sodass sich zwischen den Stapelscheiben ein erster Fluidkanal für das Kältemittel und ein zweiter Fluidkanal für das Kühlmittel, zum Beispiel Wasser mit einem Frostschutzmittel, ausbilden. Das Kältemittel wird dabei durch wenigstens zwei, vorzugsweise wenigstens drei, Abschnitte des ersten Fluidkanals zwischen den Stapelscheiben in entgegengesetzter Richtung, das heißt mäanderförmig, durch den ersten Fluidkanal zwischen den Stapelscheiben geleitet. Abweichend hiervon kann das Kältemittel auch nur in einer Richtung durch den Wärmeübertrager geleitet werden. Dabei ist es erforderlich, den Wärmeübertrager als Verdampfer in dem Kältekreis abschalten zu können. Aus diesem Grund ist eine Abschalteinheit erforderlich, welche zusätzlichen Bauraum außerhalb des Wärmeübertragers an den Kältemittelleitungen benötigt. Die Abschalteinheit ist erforderlich, da in dem Kältekreis des Systems zwei Wärmeübertrager bzw. Verdampfer angeordnet sind und diese einzeln zu- und abgeschaltet werden müssen.

Die Aufgabe der vorliegenden Erfindung besteht deshalb darin, ein System für ein Kraftfahrzeug zum Erwärmen und/oder Kühlen einer Batterie und eine Kraftfahrzeugklimaanlage zur Verfügung zu stellen, bei dem der Wärmeübertrager und die Abschalteinheit einen geringen Bauraum benötigen und einfach sowie preiswert in der Herstellung ist.

Diese Aufgabe wird gelöst mit einem System für ein Kraftfahrzeug zum Erwärmen und/oder Kühlen einer Batterie und vorzugsweise eines Kraftfahrzeuginnenraumes, umfassend einen Kühlmittelkreislauf zum Kühlen der Batterie und vorzugsweise des Kraftfahrzeuginnenraumes, einen Kältekreis mit einem Kondensator, einem Verdichter, einem ersten AC-Verdampfer zum Kühlen des Kraftfahrzeuginnenraumes und einem zweiten Verdampfer zum Kühlen der Batterie, indem der zweite Verdampfer als Wärmeübertrager mit dem Kühlmittelkreislauf thermisch gekoppelt ist. Der zweite Verdampfer ist als ein Verdampfer als Wärmeübertrager oder Chiller in Scheibenbauweise ausgebildet und umfasst eine Vielzahl von übereinander gestapelten Stapelscheiben, so dass zwischen den Stapelscheiben ein erster Fluidkanal für ein erstes Fluid als Kältemittel und ein zweiter Fluidkanal für ein zweites Fluid als Kühlmittel, z. B. Wasser, ein Gemisch aus Wasser und Glysantin oder Luft, ausgebildet ist, die Stapelscheiben erste Durchbrechungen als ersten Fluidkanal zur Zuführung und Abführung des ersten Fluides aufweisen, die Stapelscheiben zweite Durchbrechungen als zweiten Fluidkanal zur Zuführung und Abführung des zweiten Fluides aufweisen, vorzugsweise wenigstens eine Umlenkeinrichtung, welche wenigstens eine erste Durchbrechung verschließt, so dass das erste Fluid mäanderförmig durch wenigstens zwei, vorzugsweise wenigstens drei, Abschnitte des ersten Fluidkanales zwischen den Stapelscheiben in entgegengesetzter Richtung durch den Wärmeübertrager geführt ist, eine erste Ein- und Auslassöffnung zur Ein- und Ausleitung des ersten Fluides, eine zweite Ein- und Auslassöffnung zur Ein- und Ausleitung des zweiten Fluides, ein Expansionsventil für das erste Fluid als Kältemittel und das Expansionsventil an dem übrigen Wärmeübertrager angebaut oder integriert ist, die erste Ein- oder Auslassöffnung von einem Tauchrohr gebildet ist und durch das Tauchrohr das erste Fluid in den ersten Fluidkanal einleitbar ist, so dass die erste Ein- und Auslassöffnung an der gleichen Seite des Wärmeübertragers ausgebildet sind, wobei der Verdampfer eine Abschalteinheit für das erste Fluid als Kältemittel umfasst und die Abschalteinheit an dem übrigen Wärmeübertrager angebaut oder integriert ist. In vorteilhafter Weise umfasst damit der Verdampfer als Wärmeübertrager oder Chiller auch eine Abschalteinheit die am übrigen Wärmeübertrager angebaut oder integriert ist. Mit der Abschalteinheit kann der erste Fluidkanal für das Kältemittel vollständig verschlossen werden und dadurch das Durchleiten von Kältemittel durch den Verdampfer verhindert werden. Dies ist im Allgemeinen erforderlich, um in einem System zum Erwärmen und/oder Kühlen einer Batterie und eines Kraftfahrzeuginnenraumes das Durchleiten von Kältemittel durch den Verdampfer verhindern zu können und dadurch das Kühlen der Batterie abschalten zu können. Mit der Abschalteinheit kann damit der erste Fluidkanal vollständig geschlossen und geöffnet werden. Vorzugsweise ist dies von einer Steuerungseinheit steuerbar und/oder regelbar.

Zweckmäßig weist der Verdampfer keine Umlenkeinrichtung auf, so dass das erste Fluid nur in einer Richtung durch dem Verdampfer leitbar ist oder strömt.

Insbesondere ist das Expansionsventil und/oder die Abschalteinheit mit einem Verbindungsflansch an dem übrigen Verdampfer befestigt. Das Expansionsventil und/oder die Abschalteinheit sind mittels des Verbindungsflansches damit am übrigen Verdampfer befestigt. Das Expansionsventil und/oder die Abschalteinheit ist beispielsweise lösbar mittels einer Form und/oder kraftschlüssigen Verbindung, z. B. einer Schraub- oder Rastverbindung, an dem Verbindungsflansch befestigt.

In einer weiteren Ausgestaltung ist der Verbindungsflansch an dem übrigen Verdampfer stoff- und/oder kraft- und/oder formschlüssig, insbesondere mit einer Lötverbindung, befestigt. Der Verbindungsflansch wird vorzugsweise beim Löten des Wärmeübertragers im Lötofen an den übrigen Verdampfer angelötet.

In einer ergänzenden Ausführungsform weist das Expansionsventil eine konstante, nicht veränderbare Strömungsquerschnittsfläche auf. Das Expansionsventil weist eine konstante, nicht veränderbare Strömungsquerschnittsfläche auf, d. h., dass das Expansionsventil nur als wenigstens eine Öffnung ausgebildet ist. Die wenigstens eine Öffnung, insbesondere nur eine Öffnung, des Expansionsventils ist dabei an einem Teil des Verdampfers ausgebildet.

Vorzugsweise ist das Expansionsventil als eine Öffnung in der Abschalteinheit oder als eine Öffnung in dem Verbindungsflansch ausgebildet. Die Abschalteinheit oder der Verbindungsflansch weist beispielsweise eine Engstelle oder eine Blende auf, welche die Öffnung des Expansionsventiles darstellt.

In einer Variante ist das Expansionsventil als eine Öffnung, insbesondere Strömungseinlassöffnung oder Strömungsauslassöffnung, oder Blende oder Engstelle an dem Tauchrohr ausgebildet. Beispielsweise ist an dem Tauchrohr eine Strömungseinlassöffnung zum Einleiten von Kältemittel als Strömungsöffnung in das Tauchrohr ausgebildet und eine Strömungsauslassöffnung als Strömungsöffnung zum Ausleiten des Kältemittels vorhanden. Dabei weist z. B. die Strömungsauslassöffnung eine entsprechende Strömungsquerschnittsfläche auf, z. B. von 0,2 mm², so dass die Strömungsauslassöffnung das Expansionsventil mit der konstanten, nicht veränderbaren Strömungsquerschnittsfläche bildet.

Zweckmäßig liegt die Strömungsquerschnittsfläche des Expansionsventils mit konstanter Strömungsquerschnittsfläche bei einer Kühlleistung, z. B. durchschnittliche Batterieabwärme, für das zweite Fluid von 0,2 kW zwischen 0,03 mm² und 0,3 mm², insbesondere zwischen 0,05 mm² und 0,2 mm², und liegt bei Kühlleistung von 1,8 kW zwischen 0,3 mm² und 1,2 mm², insbesondere zwischen 0,3 mm² und 1 mm², besonders bevorzugt zwischen 0,4 mm² und 0,75 mm², bei einer Kühlleistung zwischen 0,2 kW und 1,8 kW ist die Strömungsquerschnittsfläche zwischen diesen Werten linear interpoliert. Bei derartigen Strömungsquerschnittsflächen des Expansionsventiles ergibt sich ein besonders günstiger Betrieb des Kältekreises am Verdampfer.

In einer weiteren Ausführungsform ist das Expansionsventil ein elektronisches Expansionsventil und die Abschalteinheit ist von dem elektronischen Expansionsventil gebildet. Das Expansionsventil ist als elektronisches Expansionsventil ausgebildet und die Strömungsquerschnittsfläche des Expansionsventiles ist dabei, vorzugsweise stufenlos, veränderbar. Die Veränderung der Strömungsquerschnittsfläche des elektronischen Expansionsventiles kann von einer Steuerungseinheit in Abhängigkeit von wenigstens einem Parameter, z. B. der Temperatur des Kältemittels am Einströmkanal und/oder am Ausströmkanal oder und der durch den Verdampfer pro Zeiteinheit geleiteten Menge an Kältemittel, gesteuert und/oder geregelt werden. Dabei kann mit dem elektronischen Expansionsventil die Strömungsquerschnittsfläche auch auf 0 verändert werden, so dass das elektronische Expansionsventil auch die Abschalteinheit bildet

In einer ergänzenden Variante durchstößt das Tauchrohr die wenigstens eine Umlenkeinrichtung, so dass das durch das Tauchrohr geleitete erste Fluid durch die wenigstens eine Umlenkeinrichtung durchleitbar ist.

In einer weiteren Ausgestaltung ist die wenigstens eine Umlenkeinrichtung als eine Umlenkscheibe oder ein separates Dichtelement, z. B. Dichtplatte, ausgebildet. Eine Umlenkscheibe ist beispielsweise als eine Stapelscheibe ausgebildet, welche nur eine erste Durchbrechung anstelle von zwei Durchbrechungen aufweist, sodass dadurch das erste Fluid in dem Raum zwischen den entsprechenden ersten Durchbrechungen umgeleitet wird und dadurch den ersten Fluidkanal zwischen den Stapelscheiben in entgegengesetzter Richtung mäanderförmig durchströmt. Ein separates Dichtelement, zum Beispiel eine Dichtplatte oder eine Dichtlippe, schließt dabei eine erste Durchbrechung der Stapelscheibe ab, sodass dadurch mit einem zusätzlichen Bauteil an der Stapelscheibe eine erste Durchbrechung abgeschlossen ist.

In einer zusätzlichen Ausgestaltung ist das Expansionsventil, vorzugsweise unmittelbar, ohne einen Verbindungsflansch an dem übrigen Wärmeübertrager, zum Beispiel an einer Abdeckplatte oder an einer Bodenplatte, befestigt.

In einer ergänzenden Ausführungsform umfasst der Wärmeübertrager eine Fixierungseinrichtung zur Befestigung des Wärmeübertragers und vorzugsweise ist die Fixierungseinrichtung von dem Verbindungsflansch gebildet. Abweichend hiervon kann die Fixierungseinrichtung auch als zusätzliches Bauteil in Ergänzung zu dem Verbindungsflansch bzw. dem Verbindungsblock ausgebildet sein. Beispielsweise ist eine derartige Fixierungseinrichtung stoffschlüssig mit Löten an der Abdeckplatte oder an der Bodenplatte befestigt. Die Fixierungseinrichtung als gesondertes Bauteil oder als Verbindungsflansch weist dabei wenigstens eine, vorzugsweise mehrere, Bohrungen auf und in diesen Bohrungen können Befestigungselemente, zum Beispiel Schrauben oder Bolzen, befestigt werden zur Fixierung des Wärmeübertragers an einem anderen Bauteil, zum Beispiel einer Karosserie eines Kraftfahrzeuges.

In einer weiteren Ausgestaltung bestehen die Komponenten des Wärmeübertragers, insbesondere das Tauchrohr, die Stapelscheiben, die Abdeckplatte, die Bodenplatte, der Verbindungsflansch und/oder das Expansionsventil wenigstens teilweise, insbesondere vollständig, aus Metall, insbesondere Stahl, Eisen oder Aluminium oder aus Buntmetall.

In einer ergänzenden Variante sind die Komponenten des Wärmeübertragers stoffschlüssig, insbesondere mittels Löten, miteinander verbunden.

Zweckmäßig weisen die Komponenten des Wärmeübertragers eine Plattierung mit Lot auf zur stoffschlüssigen Verbindung der Komponenten des Wärmeübertragers mittels Löten in einem Lötofen.

In einer zusätzlichen Ausführungsform weisen die Abdeckplatte und/oder die Bodenplatte eine größere, vorzugsweise um das wenigstens 1,5-, 2-, 3- oder 5-Fache größere, Dicke auf als die Stapelscheiben.

In einer weiteren Ausgestaltung ist die Länge des Tauchrohres kleiner als die Ausdehnung des Stapels senkrecht zu einer von den Stapelscheiben aufgespannten Ebene.

Zweckmäßig ist das Tauchrohr im Querschnitt kreisförmig, ellipsenförmig, mehreckig, z. B. drei- oder viereckig, insbesondere quadratisch, ausgebildet. Zweckmäßig sind die Stapelscheiben des Wärmeübertragers zu einem Block aus übereinander gestapelten Stapelscheiben angeordnet.

In einer Variante sind die Stapelscheiben im Wesentlichen, z. B. mit einer Abweichung von weniger als 10°, 5° oder 2°, parallel übereinander angeordnet.

Vorzugsweise umfasst der Wärmeübertrager wenigstens 5, 6, 10, 20, 30, 38, 50, 56 oder 68 Stapelscheiben.

Eine erfindungsgemäße Kraftfahrzeugklimaanlage umfasst ein in dieser Schutzrechtsanmeldung beschriebenes System.

Im Nachfolgenden werden Ausführungsbeispiele der Erfindung unter Bezugnahme auf die beigefügten Zeichnungen näher beschrieben. Es zeigt:
- Fig. 1: eine perspektivische Schnittansicht eines Wärmeübertragers in einem ersten Ausführungsbeispiel mit einem Expansionsventil,
- Fig. 2: eine perspektivische Schnittansicht des Wärmeübertragers in einem zweiten Ausführungsbeispiel mit dem Expansionsventil,
- Fig. 3: eine weitere perspektivische Schnittansicht des Wärmeübertragers gemäß Fig. 2 ohne Expansionsventil,
- Fig. 4: eine weitere perspektivische Ansicht des Wärmeübertragers gemäß Fig. 2 mit Expansionsventil,
- Fig. 5: eine perspektivische Schnittansicht des Wärmeübertragers in einem dritten Ausführungsbeispiel mit dem Expansionsventil,
- Fig. 6: ein Diagramm einer optimalen Strömungsquerschnittsfläche einer Öffnung des Expansionsventils gemäß Fig. 5 in Abhängigkeit von der Kühlleistung bzw. Abwärme einer zu kühlenden Batterie und
- Fig. 7: eine vereinfachte Darstellung eines Systems zum Erwärmen und/oder Kühlen einer Batterie und eines Kraftfahrzeuginnenraumes.

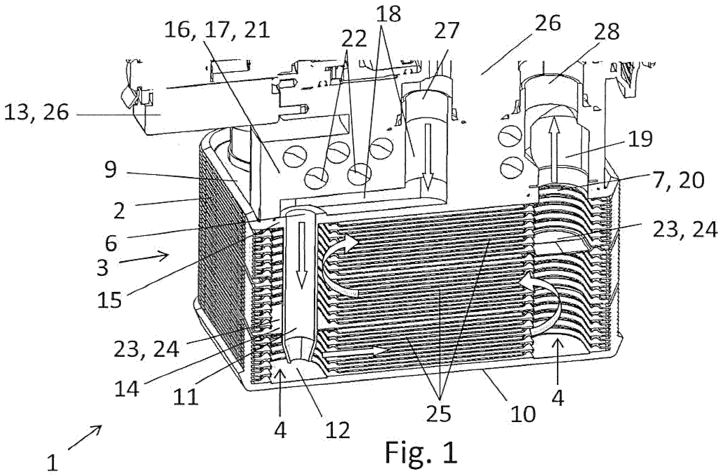

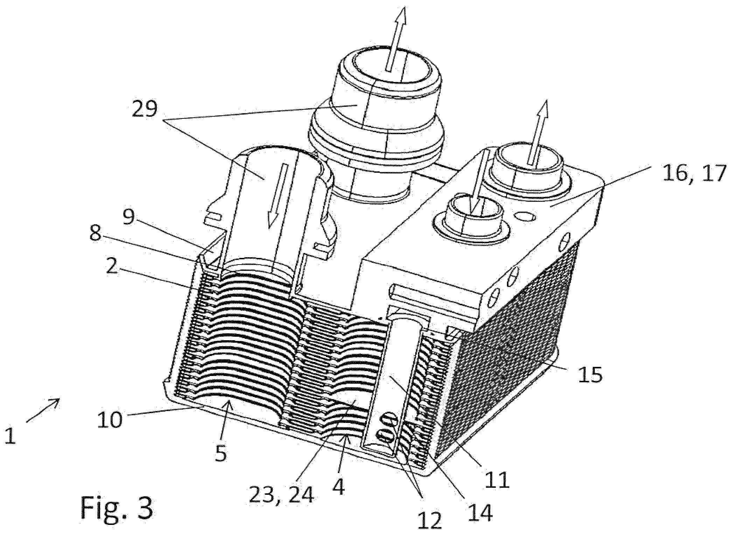

Der in Fig. 1 in einer Seitenansicht dargestellte Verdampfer 1 als Wärmeübertrager 1 oder Chiller 1 wird in einem System 34 zum Erwärmen und/oder Kühlen einer Batterie 40 eines Kraftfahrzeuges als Hybrid- oder Elektrofahrzeug eingesetzt. Der Wärmeübertrager 1 ist dabei als Wärmeübertrager 1 in Scheibenbauweise ausgeführt. Eine Vielzahl von Stapelscheiben 2 mit ersten und zweiten Durchbrechungen 4, 5 bzw. Öffnungen 4, 5 sind übereinander zu einem Stapel 3 aufgestapelt. Dadurch bildet sich zwischen den Stapelscheiben 2 ein erster Fluidkanal und ein zweiter Fluidkanal zum Durchleiten eines Fluids auf. Dadurch kann Wärme von dem ersten Fluid auf das zweite Fluid übertragen werden oder umgekehrt. Die ersten Durchbrechungen 4 bilden ebenfalls den ersten Fluidkanal, durch welchen das erste Fluid in den ersten Fluidkanal zwischen den Stapelscheiben 2 ein- und ausströmt. Dies gilt analog auch für den zweiten Fluidkanal bzw. die zweiten Durchbrechungen 5. Das obere Ende des Stapels 3 aus den Stapelscheiben 2 gemäß der Darstellung in Fig. 1 ist oben von einer Abdeckplatte 9 abgeschlossen und unten ist der Stapel 3 von einer Bodenplatte 10 abgeschlossen. Die Abdeckplatte 9 und Bodenplatte 10 weisen dabei eine größere Dicke auf als die Stapelscheiben 2. Auch die Abdeckplatte 9 weist erste Durchbrechungen 4 bzw. Öffnungen und zweite Durchbrechungen 5 bzw. Öffnungen 5 zum Durchleiten des ersten und zweiten Fluides auf. Die beiden ersten Durchbrechungen 4 sind dabei ausschließlich an der Abdeckplatte 9 und nicht an der Bodenplatte 10 ausgebildet, so dass die beiden ersten Durchbrechungen 4 an einer Seite des Stapels 3 ausgebildet sind. Eine erste Durchbrechung 4 bildet eine erste Einlassöffnung 6 für das erste Fluid, hier Kältemittel, und eine weitere erste Durchbrechung 4 an der Abdeckplatte 9 bildet eine erste Auslassöffnung 7 für das Kältemittel, Analog bildet eine zweite Einlassöffnung 8 (Fig. 3) und eine zweite Auslassöffnung (nicht dargestellt) an der Abdeckplatte 9 die Ein- und Auslassöffnung 8 für das zweite Fluid, hier Kühlmittel. Das zweite Fluid wird durch den zweiten Fluidkanal zwischen den Stapelscheiben 2 ohne Umlenkung und nicht mäanderförmig in nur einer Strömungsrichtung durch den zweiten Fluidkanal geleitet.

Die erste Durchbrechung 4 an der Abdeckplatte 9, welche eine erste Einlassöffnung 6 für das Kältemittel bildet, weist dabei ein Tauchrohr 11 auf. Das Tauchrohr 11 ist dabei stoffschlüssig mittels einer Lötverbindung an der Abdeckplatte 9 im Bereich der ersten Durchbrechung 4 bzw. der ersten Einlassöffnung 6 befestigt. Dabei stellt diese Befestigung des Tauchrohres 11 an der Abdeckplatte 9 ein Festlager 15 für das Tauchrohr 11 dar. Das Kältemittel wird durch den ersten Fluidkanal zwischen den Stapelscheiben 2 durch drei Abschnitte 25 in entgegengesetzter Richtung mäanderförmig durch den ersten Fluidkanal zwischen den Stapelscheiben 2 geleitet. Hierzu ist es erforderlich, dass die ersten Durchbrechungen 4 der Stapelscheiben 2 an zwei Stellen verschlossen sind. Hierzu weisen zwei Stapelscheiben 2 keine ersten Durchbrechungen 4 auf und bilden damit eine Umlenkscheibe 24 als Umlenkeinrichtung 23. In Fig. 1 sind an den in Fig. 1 dargestellten linken ersten Durchbrechungen 4 eine untere Umlenkscheibe 24 vorhanden, welche die linken ersten Durchbrechungen 4 abtrennt und es ist an den rechten ersten Durchbrechungen 4 eine obere Umlenkscheibe 24 vorhanden, welche an einer Stelle den Raum von den rechten ersten Durchbrechungen 4 ausgebildeten ersten Fluidkanal abtrennt. Die untere Umlenkscheibe 24 weist dabei eine Öffnung auf, durch welche das Tauchrohr 11 durchgeführt ist. Ein unteres Ende des Tauchrohres 11 weist dabei eine axiale Strömungsöffnung 12 auf, durch welche das an der ersten Einlassöffnung 6 eingeleitete flüssige Kältemittel aus dem Tauchrohr 11 ausströmt in den ersten Fluidkanal unterhalb der Umlenkscheibe 24. Nach dem Ausströmen aus der Strömungsöffnung 12 strömt das Kältemittel von links nach rechts durch den untersten Abschnitt 25, wird anschließend in dem ersten Fluidkanal im Bereich der rechten ersten Durchbrechungen 4 umgeleitet und strömt anschließend in entgegengesetzter Richtung durch den mittleren Abschnitt 25 des ersten Fluidkanals. Anschließend wird das Kältemittel an den linken ersten Durchbrechungen 4 oberhalb der Umlenkscheibe 24 und außerhalb des Tauchrohres 11 wiederum umgeleitet und strömt durch den obersten Abschnitt 25 und anschließend aus dem obersten Abschnitt 25 in den ersten Fluidkanal oberhalb der oberen Umlenkscheibe 24 in die rechten ersten Durchbrechungen 4 und anschließend aus der ersten Auslassöffnung 7 aus dem Wärmeübertrager 1 bzw. dem Stapel 3 aus den Stapelscheiben 2 wieder aus. Die Verbindung zwischen dem Tauchrohr 11 und der Umlenkscheibe 24 ist dabei als ein Loslager 14 ausgebildet, sodass dadurch in Richtung einer Längsachse (nicht dargestellt) des Tauchrohres 11 das Tauchrohr 11 beweglich zu der Umlenkscheibe 24 als Loslager 14 ist. Die Strömungsöffnung 12 des Tauchrohres 11 ist dabei axial zu der Längsachse des Tauchrohres 11 ausgebildet.

Auf der Abdeckplatte 9 ist mittels einer Lötverbindung ein Verbindungsflansch 16 bzw. ein Verbindungsblock 17 aus Metall befestigt. Der Verbindungsflansch 16 weist dabei einen Einströmkanal 18 zum Einleiten des Kältemittels in den Wärmeübertrager 1 auf und einen Ausströmkanal 19 zum Ausleiten des Kältemittels aus dem Wärmeübertrager 1 auf. Dabei ist der Ausströmkanal 19 fluchtend zu der ersten Auslassöffnung 7 ausgebildet und der Einströmkanal 18 weist zwei Biegungen bzw. Kurven als Umlenkstellen von ungefähr 90° auf. Ferner ist auch eine Verbindungsflansch-Auslassöffnung 20 als Ende des Ausströmkanals 19 fluchtend zu der ersten Auslassöffnung 7 an einer Stapelscheibe 7 bzw. an der Abdeckplatte 9 ausgebildet. Dabei stellt die erste Auslassöffnung 7 auch eine rechte erste Durchbrechung 4 dar. Der Verbindungsblock 17 ist auch eine Fixierungseinrichtung 21 zur Befestigung des Wärmeübertragers 1 an anderen Bauteilen, zum Beispiel einer Karosserie eines Kraftfahrzeugs (nicht dargestellt). Hierzu weist die Fixierungseinrichtung 21 bzw. der Verbindungsflansch 16 mehrere Bohrungen 22 auf. Durch diese Bohrungen 22 kann mittels Schrauben oder Bolzen (nicht dargestellt) in den Bohrungen 22 eine mechanische Verbindung zwischen der Fixierungseinrichtung 21 und einem anderen Bauteil hergestellt werden. Abweichend von der stoffschlüssigen Lötverbindung zwischen dem Verbindungsblock 17 und der Abdeckplatte 9 kann der Verbindungsflansch 16 auch mit einer nicht dargestellten Schraubverbindung und wenigstens einer O-Ring-Dichtung fluiddicht mit der Abdeckplatte 9 verbunden werden.

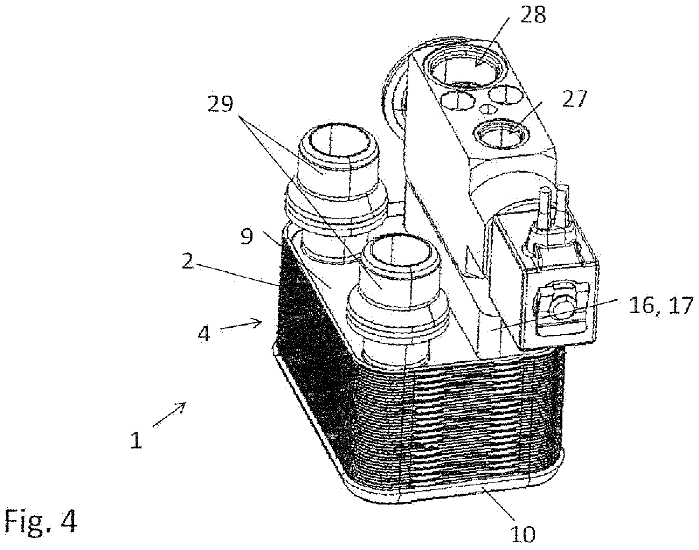

Auf dem Verbindungsflansch 16 ist ein elektronisches Expansionsventil 26 mit einem Einströmkanal 27 und einem Ausströmkanal 28 befestigt. Das Expansionsventil 26 ist dabei fluiddicht mit dem Verbindungsflansch 16 verbunden, beispielsweise mit einer stoffschlüssigen Fügeverbindung, zum Beispiel einer Laser- oder Plasmaschweißung, einer Lötverbindung oder einem anderen Fügeverfahren, wie Kleben oder Umformen. Abweichend hiervon kann auch das Expansionsventil 26 mit einer Schraub- oder Nietverbindung an dem Verbindungsflansch 16 befestigt sein und mittels wenigstens einer O-Ring-Dichtung besteht eine fluiddichte Verbindung zwischen dem Expansionsventil 26 und dem Verbindungsflansch 16 (nicht dargestellt). Dabei mündet fluchtend der Einströmkanal 18 des Verbindungsflansches 16 in den Einströmkanal 27 des Expansionsventils 26 und der Ausströmkanal 19 des Verbindungsflansches 16 mündet fluchtend in den Ausströmkanal 28 des elektronischen Expansionsventils 26. Die Strömungsquerschnittsfläche des elektronischen Expansionsventiles 26 ist veränderbar und kann mit einer nicht dargestellten Steuerungseinheit in Abhängigkeit von wenigstens einem Parameter, z. B. der Temperatur des Kältemittels, gesteuert und/oder geregelt werden. Die Strömungsquerschnittsfläche des elektronischen Expansionsventiles 26 kann außerdem auch auf 0 verändert werden, so dass das Expansionsventil 26 auch eine Abschalteinheit 13 darstellt zur Abschaltung einer Durchströmung des Verdampfers 1 mit Kältemittel als erstes Fluid. Vorzugsweise weist das elektronische Expansionsventil 26 nicht den Ausströmkanal 28 auf in Abweichung von der Darstellung in Fig. 1 bis 4, so dass durch das elektronische Expansionsventil 26 nur der Einströmkanal 27, nicht jedoch der Ausströmkanal 28 geführt ist.

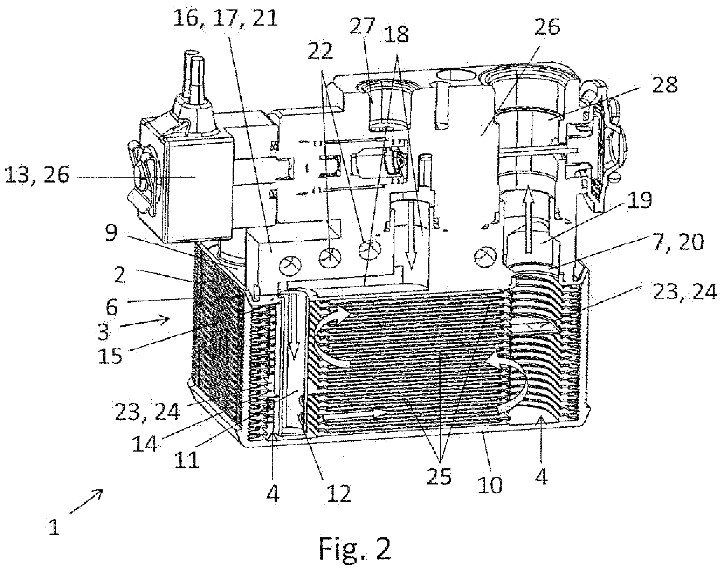

In den Fig. 2 bis 4 ist ein zweites Ausführungsbeispiel des Wärmeübertragers 1 dargestellt. Im Nachfolgenden werden im Wesentlichen nur die Unterschiede zu dem ersten Ausführungsbeispiel gemäß Fig. 1 beschrieben. Das Tauchrohr 11 weist zwei radiale Strömungsöffnungen 12 auf. Durch die beiden radialen Strömungsöffnungen 12 bezüglich der Längsachse strömt das Kältemittel in den ersten Fluidkanal unterhalb der Umlenkscheibe 24 an den linken ersten Durchbrechungen 4 ein. In Fig. 3 sind ferner zwei Kühlmittelstutzen 29 zum Ein- und Ausleiten des Kühlmittels, zum Beispiel Wasser mit einem Frostschutzmittel, dargestellt. An den Kühlmittelstutzen 29 sind fluchtend mit dem Kühlmittelstutzen 24 an den Stapelscheiben 2 zweite Durchbrechungen 5 ausgebildet. In Fig. 3 sind dabei diejenigen zweiten Durchbrechungen 5 dargestellt, durch welche das Kühlmittel in den Wärmeübertrager 1 eingeleitet wird.

In einem weiteren, nicht dargestellten Ausführungsbeispiel des Wärmeübertragers 1 mit dem elektronischen Expansionsventil 26, ist das Expansionsventil 26 ohne den Verbindungsflansch 16 an der Abdeckplatte 9, zum Beispiel mittels einer Lötverbindung, befestigt. Dabei ist die erste Auslassöffnung 7 an dem Stapel 3 aus Stapelscheiben 2 mit der Abdeckplatte 9 und der Bodenplatte 10 als übrigen Wärmeübertrager 1 fluchtend zu dem Ausströmkanal 28 des Expansionsventils 26 ausgebildet. Das durch den Einströmkanal 27 in das Expansionsventil 26 eingeleitete flüssige Kältemittel wird dabei nach dem Durchströmen durch den Einströmkanal 27 durch ein zusätzliches Kältemittelrohr von dem Ende des Einströmkanals 27 zu der ersten Einlassöffnung 6 bzw. dem Tauchrohr 11 geleitet. Dieses zusätzliche Kältemittelrohr als separates Bauteil weist dabei eine geringe Größe oder Ausdehnung auf, weil keine Umlenkung des Kältemittels von einer Seite zu einer anderen Seite des übrigen Wärmeübertragers 1 erforderlich ist und entspricht in seiner Funktion dem Einströmkanal 18 des Verbindungsflansches 16 gemäß dem ersten und zweiten Ausführungsbeispiel.

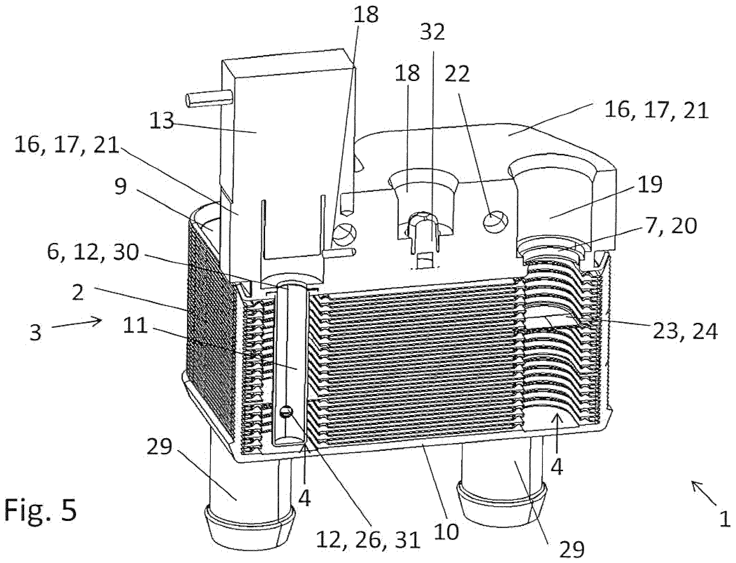

In Fig. 5 ist ein drittes Ausführungsbeispiel des Verdampfers 1 als Wärmeübertrager 1 dargestellt. Im Nachfolgenden werden im Wesentlichen nur die Unterschiede zu dem ersten und zweiten Ausführungsbeispiel gemäß den Fig. 1 bis 4 beschrieben. Das Expansionsventil 26 ist ein Expansionsventil 26 mit einer konstanten, nicht veränderbaren Strömungsquerschnittsfläche, d. h. das Expansionsventil 26 ist kein elektronisches Expansionsventil. Ferner ist an den Verdampfer 1 als zusätzliche und ergänzende Baueinheit die Abschalteinheit 13 angeordnet oder integriert. Das Kältemittel wird durch einen Einströmkanal 18 mit einem Filter 32 an dem Verbindungsflansch 16 durch den Einströmkanal 18 zu der Abschalteinheit 13 und dem Tauchrohr 11 zugeführt. Das Tauchrohr 11 weist eine Strömungseinlassöffnung 30 als Strömungsöffnung 12 auf und durch die Strömungseinlassöffnung 30 wird das Kältemittel von dem Einströmkanal 18 in das Tauchrohr 11 eingeführt. Durch eine Strömungsauslassöffnung 31 als Strömungsöffnung 12 strömt das Kältemittel in einen untersten Abschnitt 25 des Verdampfers 1 ein. Dabei ist die Strömungsquerschnittsfläche der Strömungsauslassöffnung 31 dahingehend ausgelegt, beispielsweise mit einer Strömungsquerschnittsfläche von 0,64 mm², dass die Strömungsauslassöffnung 31 an dem Tauchrohr 11 das Expansionsventil 26 des Verdampfers 1 bildet. Mit der Abschalteinheit 13 kann das Durchleiten von Kältemittel durch den Verdampfer 1 völlig unterbrochen und abgeschaltet werden. Die Abschalteinheit 13 dient somit entweder dazu die Strömungseinlassöffnung 30 des Tauchrohres 11 völlig zu verschließen oder völlig zu öffnen. Die Strömungsauslassöffnung 31 bildet damit das Expansionsventil 26.

In einem weiteren, nicht dargestellten Ausführungsbeispiel ist das Expansionsventil 26 mit konstanter nicht veränderbarer Strömungsquerschnittsfläche, welche nur eine Öffnung darstellt, als Öffnung an der Abschalteinheit 13 oder als Öffnung an dem Verbindungsflansch 16, beispielsweise als Blende oder Engstelle, ausgebildet.

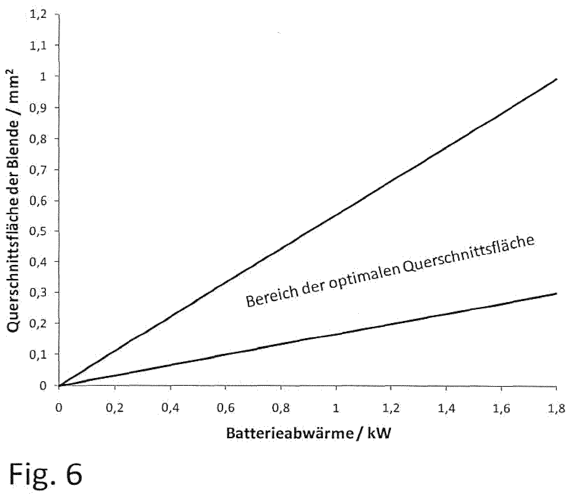

Das Expansionsventil 26 mit konstanter, nicht veränderbarer Strömungsquerschnittsfläche ist im Wesentlichen nur als eine Öffnung mit einer entsprechenden Strömungsquerschnittsfläche ausgebildet zum Durchleiten des Kältemittels durch diese Öffnung. Mit dem Verdampfer 1 kann beispielsweise eine Batterie 40 gekühlt werden, indem das zweite Fluid als Kühlmittel zum Kühlen der Batterie 40 darstellt. Für unterschiedliche Kühlleistungen bzw. Abwärmeleistungen der Batterie 40 sind entsprechend optimale Strömungsquerschnittsflächen für diese Öffnung des Expansionsventils 26 mit der konstanten, nicht veränderbaren Strömungsquerschnittsfläche in Fig. 6 dargestellt. Beispielsweise bei einer Batterieabwärme von 1 kW beträgt die optimale Strömungsquerschnittsfläche dieser Öffnung des Expansionsventiles 26 ungefähr 0,3 mm². Bei einer entsprechend derartigen Auslegung der Öffnung des Expansionsventiles 26 mit konstanter nicht veränderbarer Strömungsquerschnittsfläche kann ein optimaler Betrieb zum Kühlen der Batterie 40 gewährleistet werden.

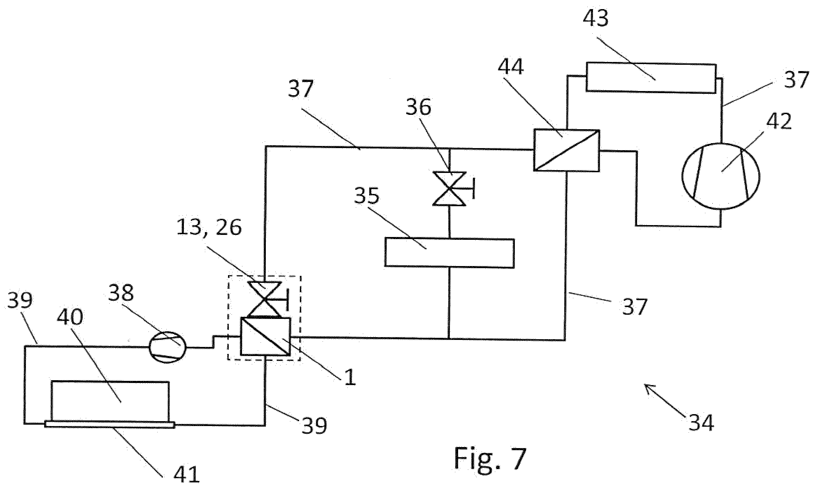

In Fig. 7 ist ein System 34 zum Kühlen der Batterie 40 und zum Kühlen eines Kraftfahrzeuginnenraumes dargestellt. Der Kraftfahrzeuginnenraum wird mit einem ersten AC-Verdampfer 35 gekühlt und durch ein Expansionsventil 36 mit einer Abschaltfunktion wird das Kältemittel durch den AC-Verdampfer 35 geleitet. Ein Kältekreis umfasst einen Kondensator 43, einen Verdichter 42 und Kältemittelleitungen 37. Die Kältemittelleitungen 37 bzw. das durch die Kältemittelleitungen 37 an dem Verdichter 42 geleitete Kältemittel ist thermisch mit einem optionalen Wärmeübertrager 44 mit einem zweiten Kältemittelkreis thermisch verbunden. Abweichend hiervon kann auf den Wärmeübertrager 44 auch verzichtet werden und das Kältemittel direkt von dem Kondensator 43 zu dem ersten AC-Verdampfer 35 und dem zweiten Verdampfer 1 geleitet werden. Der zweite Verdampfer 1 ist als Wärmeübertrager 1 bzw. Chiller 1 ausgebildet und durch den Verdampfer 1 strömt durch einen ersten Fluidkanal ein erstes Fluid, nämlich das Kältemittel und durch einen zweiten Fluidkanal ein zweites Fluid, nämlich das durch die Kühlmittelleitungen 39 strömende Kühlmittel, z. B. Wasser oder Luft, zur Kühlung der Batterie 40. Die Batterie 40 weist eine Batteriekühlplatte 41 auf, durch welche das Kühlmittel strömt. Eine Wasserpumpe 38 als Kühlmittelpumpe pumpt das Kühlmittel durch den Kühlmittelkreislauf mit den Kühlmittelleitungen 39. Der Verdampfer 1 ist dabei als ein in Fig. 1 bis 5 dargestellter Verdampfer 1 ausgebildet, d. h. in den Verdampfer 1 ist sowohl die Abschalteinheit 13 als auch das Expansionsventil 26 integriert. Dies kann dadurch erfolgen, dass entweder das Expansionsventil 26 ein elektronisches Expansionsventil 26 ist oder das Expansionsventil 26 eine konstante nicht veränderbare Strömungsquerschnittsfläche aufweist und zusätzlich als gesonderte Baueinheit an den Verdampfer 1 die Abschalteinheit 13 angebaut oder integriert ist.

Insgesamt betrachtet sind mit dem erfindungsgemäßen System mit dem Verdampfer 1 wesentliche Vorteile verbunden. In den Verdampfer 1 ist zusätzlich zu dem Expansionsventil 26 auch die Abschalteinheit 13 angebaut oder integriert. Die Abschalteinheit 13 braucht damit nicht gesondert an den Kältemittelleitungen 37 befestigt werden. Dadurch kann in vorteilhafter Weise Bauraum eingespart werden. Die Abschalteinheit 13 ist beispielsweise mit einer stoff-, form- und/oder kraftschlüssigen Verbindung an dem übrigen Verdampfer 1, z. B. dem Verbindungsflansch 16 oder einer Abdeckplatte 9 oder einem anderen Teil des Verdampfers 1, befestigt. Zwischen der Abschalteinheit 13 und dem Verdampfer 1 ist dadurch keine zusätzliche externe Kältemittelleitung 37 hydraulisch zwischengeschaltet.

### Bezugszeichenliste

1 Verdampfer, Wärmeübertrager, Chiller
2 Stapelscheibe
3 Stapel aus Stapelscheiben
4 Erste Durchbrechungen
5 Zweite Durchbrechungen
6 Erste Einlassöffnung
7 Erste Auslassöffnung
8 Zweite Einlassöffnung
9 Abdeckplatte
10 Bodenplatte
11 Tauchrohr
12 Strömungsöffnung
13 Abschalteinheit
14 Loslager
15 Festlager
16 Verbindungsflansch
17 Verbindungsblock
18 Einströmkanal an Verbindungsflansch
19 Ausströmkanal an Verbindungsflansch
20 Verbindungsflansch-Auslassöffnung
21 Fixierungseinrichtung zur Befestigung des Wärmeübertragers
22 Bohrungen in Fixierungseinrichtung
23 Umlenkeinrichtung
24 Umlenkscheibe
25 Abschnitt des ersten Fluidkanales
26 Expansionsventil
27 Einströmkanal an Expansionsventil
28 Ausströmkanal an Expansionsventil
29 Kühlmittelstutzen
30 Strömungseinlassöffnung
31 Strömungsauslassöffnung
32 Filter
33 -
34 System
35 AC-Verdampfer
36 Expansionsventil mit Abschaltfunktion
37 Kältemittelleitung
38 Wasserpumpe
39 Kühlmittelleitung
40 Batterie
41 Batteriekühlplatte
42 Verdichter
43 Kondensator
44 Wärmeübertrager

## Patentansprüche

1. System (34) für ein Kraftfahrzeug zum Erwärmen und/oder Kühlen einer Batterie (40) und vorzugsweise eines Kraftfahrzeuginnenraumes, umfassend
einen Kühlmittelkreislauf zum Kühlen der Batterie (40) und vorzugsweise des Kraftfahrzeuginnenraumes,
einen Kältekreis mit einem Kondensator (43), einem Verdichter (42), einem ersten AC-Verdampfer (35) zum Kühlen des Kraftfahrzeuginnenraumes und einem zweiten Verdampfer (1) zum Kühlen der Batterie (40), indem der zweite Verdampfer (1) als Wärmeübertrager (1) mit dem Kühlmittelkreislauf thermisch gekoppelt ist, **dadurch gekennzeichnet, dass** der zweite Verdampfer (1) als ein Verdampfer (1) als Wärmeübertrager (1) oder Chiller (1) in Scheibenbauweise ausgebildet ist, umfassend
- eine Vielzahl von übereinander gestapelten Stapelscheiben (2), so dass zwischen den Stapelscheiben (2) ein erster Fluidkanal für ein erstes Fluid als Kältemittel und ein zweiter Fluidkanal für ein zweites Fluid als Kühlmittel, z. B. Wasser oder Luft, ausgebildet ist,
- die Stapelscheiben (2) erste Durchbrechungen (4) als ersten Fluidkanal zur Zuführung und Abführung des ersten Fluides aufweisen,
- die Stapelscheiben (2) zweite Durchbrechungen als zweiten Fluidkanal zur Zuführung und Abführung des zweiten Fluides aufweisen,
- eine erste Ein- und Auslassöffnung (6, 7) zur Ein- und Ausleitung des ersten Fluides,
- eine zweite Ein- und Auslassöffnung (8) zur Ein- und Ausleitung des zweiten Fluides,
- ein Expansionsventil (26) für das erste Fluid als Kältemittel und das Expansionsventil (26) an dem übrigen Wärmeübertrager (1) angebaut oder integriert ist,
- wobei die erste Ein- oder Auslassöffnung (6, 7) von einem Tauchrohr (11) gebildet ist und durch das Tauchrohr (11) das erste Fluid in den ersten Fluidkanal einleitbar ist, so dass die erste Ein- und Auslassöffnung (6, 7) an der gleichen Seite des Wärmeübertragers (1) ausgebildet sind, und wobei
- der Verdampfer (1) eine Abschalteinheit (13) für das erste Fluid als Kältemittel umfasst und die Abschalteinheit (13) an dem übrigen Wärmeübertrager (1) angebaut oder integriert ist.

2. System nach Anspruch 1, **dadurch gekennzeichnet, dass** das Expansionsventil (26) und/oder die Abschalteinheit (13) mit einem Verbindungsflansch (16, 17) an dem übrigen Verdampfer (1) befestigt ist.

3. System nach Anspruch 2, **dadurch gekennzeichnet, dass** der Verbindungsflansch (16, 17) an dem übrigen Verdampfer (1) stoff- und/oder kraft- und/oder formschlüssig, insbesondere mit einer Lötverbindung, befestigt ist.

4. System nach einem oder mehreren der vorhergehenden Ansprüche, **dadurch gekennzeichnet, dass** das Expansionsventil (26) eine konstante, nicht veränderbare Strömungsquerschnittsfläche aufweist.

5. System nach Anspruch 4, **dadurch gekennzeichnet, dass** das Expansionsventil (26) als eine Öffnung in der Abschalteinheit (13) oder als eine Öffnung in dem Verbindungsflansch (16, 17) ausgebildet ist.

6. System nach Anspruch 4, **dadurch gekennzeichnet, dass** das Expansionsventil (26) als eine Öffnung, insbesondere Strömungseinlassöffnung (30) oder Strömungsauslassöffnung (31), oder Blende oder Engstelle an dem Tauchrohr (11) ausgebildet ist.

7. System nach einem oder mehreren der Ansprüche 4 bis 6, **dadurch gekennzeichnet, dass** die Strömungsquerschnittsfläche des Expansionsventils (26) mit konstanter Strömungsquerschnittsfläche bei einer Kühlleistung für das zweite Fluid von 0,2 kW zwischen 0,03 mm² und 0,3 mm², insbesondere zwischen 0,05 mm² und 0,2 mm², liegt und bei Kühlleistung von 1,8 kW zwischen 0,3 mm² und 1,2 mm², insbesondere zwischen 0,3 mm² und 1 mm², besonders bevorzugt zwischen 0,4 mm² und 0,75 mm², liegt und bei einer Kühlleistung zwischen 0,2 und 1,8 die Strömungsquerschnittsfläche zwischen diesen Werten linear interpoliert ist.

8. System nach einem oder mehreren der Ansprüche 1 bis 3, **dadurch gekennzeichnet, dass** das Expansionsventil (26) ein elektronisches Expansionsventil (26) ist und die Abschalteinheit (13) von dem elektronischen Expansionsventil (26) gebildet ist.

9. Kraftfahrzeugklimaanlage, **dadurch gekennzeichnet, dass** die Kraftfahrzeugklimaanlage ein System gemäß einem der Ansprüche 1 bis 8 umfasst.

## Claims

1. A system (34) for a motor vehicle for heating and/or cooling a battery (40) and preferably a motor vehicle passenger compartment, comprising
a coolant circuit for cooling the battery (40) and preferably the motor vehicle passenger compartment,
a refrigeration circuit with a condenser (43), a compressor (42), a first AC evaporator (35) for cooling the motor vehicle passenger compartment, and a second evaporator (1) for cooling the battery (40), in that the second evaporator (1) as heat exchanger (1) is thermally coupled to the coolant circuit, **characterised in that** the second evaporator (1) is designed as an evaporator (1) as a heat exchanger (1) or chiller (1) in plate-type construction, comprising
- a plurality of stack plates (2) stacked atop one another such that a first fluid passage for a first fluid as refrigerant and a second fluid passage for a second fluid as coolant, for example water or air, are formed between the stack plates (2),
- the stack plates (2) have first apertures (4) as a first fluid passage for supply and return of the first fluid,
- the stack plates (2) have second apertures as a second fluid passage for supply and return of the second fluid,
- a first inlet opening and outlet opening (6, 7) for entry and exit of the first fluid,
- a second inlet opening and outlet opening (8) for entry and exit of the second fluid,
- an expansion valve (26) for the first fluid as refrigerant, and the expansion valve (26) is built onto or integrated into the rest of the heat exchanger (1),
- wherein the first inlet or outlet opening (6, 7) is composed of a dip tube (11) and the first fluid can be caused to enter the first fluid passage through the dip tube (11), so that the first inlet and outlet openings (6, 7) are implemented on the same side of the heat exchanger (1), and wherein
- the evaporator (1) incorporates a shutoff unit (13) for the first fluid as refrigerant and the shutoff unit (13) is built onto or integrated into the rest of the heat exchanger (1).

2. The system according to claim 1, **characterised in that** the expansion valve (26) and/or the shutoff unit (13) is attached to the rest of the evaporator (1) by a connecting flange (16, 17).

3. The system according to claim 2, **characterised in that** the connecting flange (16, 17) is attached to the rest of the evaporator (1) in a material-to-material and/or frictional and/or interlocking fashion, in particular by a soldered connection.

4. The system according to one or more of the preceding claims, **characterised in that** the expansion valve (26) has a constant, unchangeable cross-sectional flow area.

5. The system according to claim 4, **characterised in that** the expansion valve (26) is designed as an opening in the shutoff unit (13) or as an opening in the connecting flange (16, 17).

6. The system according to claim 4, **characterised in that** the expansion valve (26) is designed as an opening, in particular a flow inlet opening (30) or flow outlet opening (31), or orifice or narrow point at the dip tube (11).

7. The system according to one or more of claims 4 to 6, **characterised in that** the cross-sectional flow area of the expansion valve (26) with constant cross-sectional flow area is between 0.03 mm² and 0.3 mm², in particular between 0.05 mm² and 0.2 mm² for a cooling output for the second fluid of 0.2 kW, and for a cooling output of 1.8 kW is between 0.3 mm² and 1.2 mm², in particular between 0.3 mm² and 1 mm², especially preferably between 0.4 mm² and 0.75 mm², and for a cooling output between 0.2 and 1.8 the cross-sectional flow area is linearly interpolated between these values.

8. The system according to one or more of claims 1 to 3, **characterised in that** the expansion valve (26) is an electronic expansion valve (26), and the shutoff unit (13) consists of the electronic expansion valve (26).

9. A motor vehicle air conditioning system, **characterised in that** the motor vehicle air conditioning system comprises a system according to one of claims 1 to 8.

## Revendications

1. Système (34) conçu pour un véhicule automobile et servant au chauffage et / ou au refroidissement d'une batterie (40) et, de préférence, de l'habitacle d'un véhicule automobile, ledit système comprenant :
un circuit de liquide de refroidissement pour le refroidissement de la batterie (40) et, de préférence, de l'habitacle du véhicule automobile,
un circuit de fluide frigorigène comprenant un condenseur (43), un compresseur (42), un premier évaporateur (35) à courant alternatif servant au refroidissement de l'habitacle du véhicule automobile et comprenant un deuxième évaporateur (1) servant au refroidissement de la batterie (40), tandis que le deuxième évaporateur (1), en tant qu'échangeur de chaleur (1), est thermiquement couplé au circuit de liquide de refroidissement,
**caractérisé en ce que** le deuxième évaporateur (1), en tant qu'évaporateur (1), en tant qu'échangeur de chaleur (1) ou refroidisseur (1), est conçu en étant du type à plaques, ledit deuxième évaporateur :
- comprenant une multiplicité de plaques empilées (2) en étant superposées les unes par rapport aux autres, de sorte que, entre les plaques empilées (2), sont formés un premier conduit de fluide pour un premier fluide servant de fluide frigorigène, et un deuxième conduit de fluide pour un deuxième fluide servant de liquide de refroidissement, par exemple de l'eau ou de l'air,
- les plaques empilées (2) présentent des premiers passages traversants (4) servant de premier conduit de fluide pour l'arrivée et l'évacuation du premier fluide,
- les plaques empilées (2) présentent des deuxièmes passages traversants servant de deuxième conduit de fluide pour l'arrivée et l'évacuation du deuxième fluide,
- comprenant une première ouverture d'entrée et de sortie (6, 7) pour l'entrée et la sortie du premier fluide,
- comprenant une deuxième ouverture d'entrée et de sortie (8) pour l'entrée et la sortie du deuxième fluide,
- comprenant un détendeur (26) pour le premier fluide servant de fluide frigorigène, et le détendeur (26) est monté sur l'autre échangeur de chaleur (1) ou intégré à celui-ci,
- où la première ouverture d'entrée ou de sortie (6, 7) est formée par un tube plongeur (11), et le premier fluide peut être introduit dans le premier conduit de fluide à travers le tube plongeur (11), de sorte que la première ouverture d'entrée et de sortie (6, 7) est configurée sur le même côté de l'échangeur de chaleur (1),
- et où l'évaporateur (1) comprend une unité de coupure (13) pour le premier fluide servant de fluide frigorigène, et l'unité de coupure (13) est montée sur l'autre échangeur de chaleur (1) ou intégrée à celui-ci.

2. Système selon la revendication 1, **caractérisé en ce que** le détendeur (26) et / ou l'unité de coupure (13) est fixé(e), avec une bride d'assemblage (16, 17), sur l'autre échangeur de chaleur (1).

3. Système selon la revendication 2, **caractérisé en ce que** la bride d'assemblage (16, 17) est fixée sur l'autre échangeur de chaleur (1), par continuité de matière et / ou par action de force et / ou par complémentarité de forme, en particulier en réalisant un assemblage brasé.

4. Système selon l'une quelconque ou plusieurs des revendications précédentes, **caractérisé en ce que** le détendeur (26) présente une surface de section d'écoulement constante, non modifiable.

5. Système selon la revendication 4, **caractérisé en ce que** le détendeur (26) est configuré comme une ouverture formée dans l'unité de coupure (13) ou comme une ouverture formée dans la bride d'assemblage (16, 17).

6. Système selon la revendication 4, **caractérisé en ce que** le détendeur (26) est configuré, sur le tube plongeur (11), comme une ouverture, en particulier comme une ouverture d'entrée d'écoulement (30) ou une ouverture de sortie d'écoulement (31), ou bien comme un obturateur ou un étranglement.

7. Système selon l'une quelconque ou plusieurs des revendications 4 à 6, **caractérisé en ce que**, à surface de section d'écoulement constante et dans le cas d'une puissance de refroidissement pour le deuxième fluide égale à 0,2 kW, la surface de section d'écoulement du détendeur (26) est comprise entre 0,03 mm² et 0,3 mm², en particulier comprise entre 0,05 mm² et 0,2 mm², et, dans le cas d'une puissance de refroidissement égale à 1,8 kW, est comprise entre 0,3 mm² et 1,2 mm², en particulier comprise entre 0,3 mm² et 1 mm², de façon particulièrement préférable comprise entre 0,4 mm² et 0,75 mm², et, dans le cas d'une puissance de refroidissement comprise entre 0,2 kW et 1,8 kW, la surface de section d'écoulement est interpolée de manière linéaire entre ces valeurs.

8. Système selon l'une quelconque ou plusieurs des revendications 1 à 3, **caractérisé en ce que** le détendeur (26) est un détendeur électronique (26), et l'unité de coupure (13) est formée par le détendeur électronique (26).

9. Système de climatisation d'un véhicule automobile, **caractérisé en ce que** le système de climatisation du véhicule automobile comprend un système selon l'une quelconque des revendications 1 à 8.
